Europäisches Patentamt

European Patent Office

Office européen des brevets

(19)

(11) Veröffentlichungsnummer: **0 058 818**
**B1**

## (12) EUROPÄISCHE PATENTSCHRIFT

(45) Veröffentlichungstag der Patentschrift:
21.08.85

(21) Anmeldenummer: **82100236.7**

(22) Anmeldetag: **14.01.82**

(51) Int. Cl.⁴: **D 21 H 1/10**, B 27 K 3/52 //
C07F7/08

(54) Imprägnierungsmittel für cellulosehaltiges Material.

(30) Priorität: **24.02.81 DE 3106748**

(43) Veröffentlichungstag der Anmeldung:
**01.09.82 Patentblatt 82/35**

(45) Bekanntmachung des Hinweises auf die Patenterteilung:
**21.08.85 Patentblatt 85/34**

(84) Benannte Vertragsstaaten:
**AT BE CH DE FR GB IT LI NL SE**

(56) Entgegenhaltungen:
**US - A - 2 680 073**
**US - A - 2 729 572**

(73) Patentinhaber: **DYNAMIT NOBEL AKTIENGESELLSCHAFT, Postfach 1209, D-5210 Troisdorf, Bez. Köln (DE)**

(72) Erfinder: **Schmidt, Werner, Dr., Drachenfelsstrasse 49, D-5202 St. Augustin (DE)**

## Beschreibung

Gegenstand der vorliegenden Erfindung ist ein neues Imprägniermittel für cellulosehaltiges Material, das dieses Material wasserabweisend macht. Es enthält als aktive Substanz Hydrolyseprodukte definierter Silane, die durch Abmischen mit einer Aluminatlösung den gewünschten Effekt zeigen.

Es ist bekannt, Alkylsilane zur Hydrophobierung cellulosehaltigen Materials einzusetzen. Dazu sind alkoholische Lösungen verhältnismäßig großer Konzentration erforderlich, die beispielsweise 10% und mehr beträgt; eine wirklich befriedigende Hydrophobierung läßt sich jedoch mit solchen Lösungen nicht erreichen. Es ist deshalb auch bereits bekannt, bestimmte Metallsäureester den alkoholischen Silanlösungen zuzusetzen, um auf diese Weise den hydrophoben Effekt zu verbessern. Bei dieser Verfahrensweise wirkt sich jedoch nachteilig aus, daß die Wirkstoffe in der alkoholischen Lösung in verhältnismäßig großer Konzentration vorliegen müssen, um befriedigende Ergebnisse zu erzielen. Weiterhin erhöht die Gegenwart von Alkoholen als Lösungsmittel die Gefahr von unerwünschten Bränden und verlangt beim Arbeiten in geschlossenen Räumen den Einbau zusätzlicher Abluftvorrichtungen.

In der US-A-2 729 572 werden Lösungen aus Silikonaten und Aluminiumsalzen beschrieben, die ebenfalls zum Hydrophobieren eingesetzt werden können. Diese Lösungen sind deshalb stabil, weil sie das Silan in Form eines Silikonats enthalten; demzufolge sind die Lösungen stark alkalisch und haben die mit dieser Alkalinität verbundenen Nachteile.

In der US-A-2 680 073 wird zwar auch der Einsatz von Silanolen in Gegenwart von Aluminiumsalzen bei der Herstellung von Papier beschrieben. Dort wird aber angegeben, daß das Silanol als Dispersion eingesetzt wird und diese Dispersion gleich nach ihrem Einsatz auf einen definierten pH-Wert eingestellt werden muß, um als Imprägniermittel wirken zu können. Diese Dispersionen haben den Nachteil, wie in diesem Schutzrecht angegeben ist, daß sie sehr schnell zu Gelen kondensieren.

Es bestand deshalb die Aufgabe, ein Hydrophobierungsmittel für cellulosehaltiges Material zu finden, das bereits in geringen Konzentrationen seine maximale Wirkung zeigt und das in einem problemlosen Lösungsmittel als Lösung eingesetzt werden kann.

In Erfüllung dieser Aufgabe wurde nun ein Hydrophobierungsmittel für cellulosehaltiges Material gefunden, das als wäßrige oder wäßrig alkoholische Lösung eines Gemisches aus Alkalialuminat und Alkylsilanolen (Alkyl = Äthyl-, Propyl- oder n-Butyl) gekennzeichnet ist. Dieses Gemisch zeigt bereits als 0,2%ige Lösung in Wasser einen hydrophobierenden Effekt. Überraschenderweise besitzt jedoch nur das Gemisch dieser beiden Komponenten eine imprägnierende Wirkung, während sowohl die wäßrige Silanollösung als auch eine Aluminatlösung allein keinen imprägnierenden Effekt zeigen.

Zur Hydrophobierung werden die cellulosehaltigen Materialien in das erfindungsgemäße Gemisch getaucht und anschließend getrocknet. Es ist jedoch auch möglich, die zu imprägnierenden Materialien durch Bepinseln, Bestreichen oder Besprühen mit dem Imprägnierungsmittel zu behandeln. Es ist dabei nicht notwendig, zum Zwecke einer guten Imprägnierung, das behandelte Material anschließend noch mehrere Stunden oder Tage einer Feuchtraumlagerung auszusetzen, wie es bei Einsatz von alkoholischen Silanlösungen mitunter empfohlen wird. Bei Verwendung des erfindungsgemäßen Imprägnier- und Hydrophobierungsmittels ist das mit den Lösungen getränkte Material sofort nach dem Trocknen fertig hydrophobiert und kann direkt verwendet werden.

Mit Hilfe des erfindungsgemäßen Imprägnierungsmittels läßt sich Cellulose in reiner Form sowie in allen ihren natürlichen und synthetischen Modifikationen und Verarbeitungsformen hydrophobieren. Unter reiner Cellulose sollen dabei beispielsweise Papier, z. B. Filterpapier, oder Cellulosefäden verstanden werden, während zu den Modifikationen oder Verarbeitungsformen Produkte wie Pappe, Pappkarton, Holz, Spanplatten, Baumwollfäden oder -gewebe verstanden werden sollen. Besonders gut eignet sich das neue Imprägnierungsmittel zum Hydrophobieren von Papier in allen seinen Verarbeitungsformen, sowie auch zur Imprägnierung von Holz, bei der ebenfalls gute Resultate erzielt werden.

Die in der erfindungsgemäß eingesetzten Lösung enthaltenen Alkylsilanole haben als Alkylgruppen entweder die Äthyl-, Propyl- oder n-Butylgruppe. Mit anderen Alkylgruppen erhält man keine stabilen wäßrigen oder wäßrig alkoholischen Lösungen. Die Herstellung solcher Lösungen ist in der EP-A-0 049 365 (Priorität: 02. 10. 80; Anmeldetag: 03. 09. 81; Veröffentlichungstag: 14. 04. 82) beschrieben. Für Details dieser Herstellung wird auf dieses Schutzrecht verwiesen. Im allgemeinen erfolgt die Herstellung durch Lösen der entsprechenden Alkyltrialkoxisilane in leicht angesäuertem Wasser und gegebenenfalls anschließendem Abdestillieren des bei der Hydrolyse entstehenden Alkohols. Die Alkoxigruppen dieser Alkyltrialkoxisilane sind bevorzugt solche mit 1 bis 4 C-Atomen. In den bei dieser Hydrolyse erhaltenen wäßrigen oder wäßrig alkoholischen Lösungen sind die Alkoxigruppen des Alkyltrialkoxisilans weitgehend hydrolysiert, und das Alkylsilan liegt in der Lösung überwiegend als Alkyltrihydroxisilan vor. Erfindungsgemäß lassen sich jedoch auch Lösungen einsetzen, bei denen nur eine oder zwei der Alkoxigruppen des Alkyltrialkoxisilans zu Hydroxylgruppen umgewandelt wurden.

Ein Teil der Silanolgruppen kann auch in teilkondensierter Form mit Si—O—Si-Gruppen vorliegen, besonders wenn die wäßrigen Lösungen längere Zeit gestanden haben. In diesem Teilkondensat sollen jedoch nicht mehr als 10 Si—O—Si-Einheiten pro Molekül vorhanden sein. Eine solche Teilkondensation tritt besonders dann ein, wenn konzentriertere Lösungen als die bevorzugt zu verwenden den eingesetzt werden.

Die erfindungsgemäßen Lösungen enthalten bevorzugt zwischen 0,1 und 2,0 Gew.-% Alkylsilanol, besonders bevorzugt 0,3 bis 1,0 Gew.-%. Das Alkalialuminat wird im allgemeinen in Mengen zwischen 0,03 und 1,0 Gew.-%, vorzugsweise zwischen 0,1 und 0,4 Gew.-%, eingesetzt. Es können auch konzentriertere Lösungen eingesetzt werden, jedoch läßt sich im allgemeinen mit solchen konzentrierteren Lösungen keine Erhöhung des hydrophobierenden Effekts bewirken.

Das Gewichtsverhältnis von Alkylsilanol zu Alkalialuminat kann in weiten Grenzen zwischen 1 : 10 und 10 : 1 schwanken; bevorzugt werden auf 10 Teile Alkylsilanol zwischen 3,5 und 6 Teile Alkalialuminat eingesetzt.

Als Alkalialuminate eignen sich vor allem Natrium- und Kaliumaluminat; bevorzugt wird Natriumaluminat verwendet.

Die wäßrige Lösung des Alkylsilanols kann gegebenenfalls noch Alkohol enthalten, der aus der Hydrolyse des korrespondierenden Alkyltrialkoxisilans herrührt. Dieser Alkohol braucht in der Regel nicht abdestilliert zu werden. Sein Anteil in den bevorzugt einzusetzenden Lösungen liegt maximal bei 5 Gew.-%, im allgemeinen jedoch zwischen 1 und 3 Gew.-%, bezogen auf die Lösung. Bei konzentrierteren Silanollösungen kann der Alkoholgehalt der erfindungsgemäßen Imprägnierlösungen auch bis zu 10 Gew.-% ansteigen.

## Beispiel 1

### Herstellen einer Silanollösung

10 g Propyltrimethoxisilan werden mit 90 g Wasser, dem 2 Tropfen 1%ige HCl zugesetzt sind, bei Zimmertemperatur gerührt, bis nach wenigen Minuten eine klare Lösung entstanden ist. Die fertige Lösung enthält neben dem durch Hydrolyse abgespaltenen Alkohol theoretisch 7,4 g Propylsilantriol.

Diese Lösung wird im folgenden als Lösung a) bezeichnet.

Als Natriumaluminatlösung wird ein handelsübliches 50%iges Produkt verwendet, das im folgenden als Lösung b) bezeichnet wird.

## Beispiel 2

### 1. Vergleichsbeispiel

25 g Lösung a) werden mit Wasser auf 100 g verdünnt. In diese Lösung wird Filterpapier (Nr. 1375, Fa. Schleicher & Schüll) in Stücken von 10 x 15 cm Größe 30 sec lang eingetaucht, über Nacht getrocknet und anschließend zur Tropfenprobe auf eine Glasplatte gelegt. Nun werden 0,5 ccm Wasser aufgetropft. Der Tropfen wird mit einem Uhrglas bedeckt, um die zu beobachtende Dauer des Aufsaugens nicht durch Lufttrocknung zu verfälschen. Im vorliegenden Falle ist diese Vorsichtsmaßnahme aber unnötig, denn der Wassertropfen wird sofort vom Papier aufgesaugt.

Die gleichen Ergebnisse erhält man, wenn man 5 g oder 50 g der Lösung a) wie oben einsetzt.

Verwendet man statt des Filterpapiers Natronkraftpapier von einem Gewicht von 84 g/m², rauhe Seite nach oben, so werden die gleichen Ergebnisse erhalten.

## Beispiel 3

### 2. Vergleichsbeispiel

0,25 g Lösung b) werden mit Wasser auf 100 g verdünnt. In diese Lösung wird Filterpapier wie in Beispiel 2 30 sec lang eingetaucht, über Nacht getrocknet und anschließend zur Tropfenprobe auf eine Glasplatte gelegt. Nun werden 0,5 ccm Wasser aufgetropft und wie in Beispiel 2 ausgewertet. Der Wassertropfen wird unverzüglich aufgesaugt.

Verdoppelt man die Konzentration von Lösung b) entsprechend 0,5 g in 100 g Gesamtlösung, so bleibt das Ergebnis unverändert. Erst bei weiterer Verdoppelung auf 1,0 g b) in 100 g Gesamtlösung wird der Wassertropfen nicht mehr momentan, sondern innerhalb von 30 sec aufgesaugt.

Entsprechende Ergebnisse erhält man, wenn man statt des Filterpapiers Natronkraftpapier entsprechend Beispiel 2 einsetzt.

3

## Beispiel 4

### Imprägnieren von Papier

5 g Lösung a) werden mit 94,5 g Wasser verdünnt und 0,5 g Lösung b) hinzugefügt. In diese Mischung werden Stücke von Filterpapier und Natronkraftpapier gemäß Beispiel 2 getaucht, getrocknet und mit 0,5 ccm Wasser wie in Beispiel 2 ausgeprüft. Der Wassertropfen bleibt mehrere Stunden unverändert stehen; er ist trotz Abdecken nach ca. 50 Std. lediglich verdunstet. Verringert man die Konzentration der Mischung auf die Hälfte, entsprechend 2,5 g Lösung a) und 0,25 g Lösung b) in 100 g Imprägnierlösung, so erhält man den gleichen sehr guten Effekt der Hydrophobierung.

## Beispiel 5

### Einfluß von Natriumaluminat

Es wird wie in Beispiel 4 verfahren, wobei 5 g Lösung a) eingesetzt werden und in 100 g der Imprägnierlösung wechselnde Gehalte an Lösung b) entsprechend der folgenden Übersicht vorhanden sind:

1. 0,5 g Lösung b),
2. 0,25 g Lösung b),
3. 0,125 g Lösung b),
4. 0,06 g Lösung b).

Die Wassertropfenprobe entsprechend Beispiel 2 ergibt, daß bei jeder dieser Lösungen eine sehr gute Hydrophobierung erhalten wurde. Es wurde kein Wasser vom Papier aufgesaugt und nach ca. 50 Std. war der Wassertropfen lediglich verdunstet.

## Beispiel 6

### Hydrophobieren von Holz

Ausgetestet werden 15 x 15 cm große Stücke einer Tischlerplatte von 12 mm Stärke aus Limba-Holz. Die Holzstücke werden jeweils in die zu prüfende Lösung getaucht und während 1 Min. damit bepinselt. Anschließend werden sie über Nacht getrocknet und in gleicher Weise wie das Papier in den vorangegangenen Beispielen ausgetestet.

Die Ergebnisse der Tests bei verschiedenen Konzentrationen sind in der folgenden Tabelle angegeben:

| Wirkstoffgehalt in 100 g Imprägnierlösung | Ergebnis |
|---|---|
| 2,5 g Lösung a) + 0,25 g Lösung b) | Aufsaugen des Tropfens nach ca. 1 Stunde |
| 5,0 g Lösung a) + 0,5 g Lösung b) | kein Aufsaugen des Tropfens |
| 12,5 g Lösung a) + 1,25 g Lösung b) | kein Aufsaugen des Tropfens |
| 1,25 g Lösung a) + 0,12 g Lösung b) (Null-Versuch) | Aufsaugen des Tropfens nach ca. $^1/_2$ Stunde |

**Patentansprüche**

1. Imprägnierungsmittel zum Hydrophobieren von cellulosehaltigem Material auf Basis eines Gemisches aus Alkylsilanolen und Aluminiumsalzen, gekennzeichnet als wäßrige oder wäßrig alkoholische Lösung eines Gemisches aus Alkalialuminat und Alkylsilanolen, wobei Alkyl für einen Ethyl-, Propyl- oder n-Butylrest steht.

2. Mittel gemäß Anspruch 1, dadurch gekennzeichnet, daß das Gemisch aus Alkalialuminat und Alkylsilanolen im Gewichtsverhältnis 1 : 10 bis 10 : 1 in der Lösung enthalten ist.

3. Mittel gemäß Ansprüchen 1 oder 2, dadurch gekennzeichnet, daß es das Alkalialuminat in Anteilen zwischen 0,03 und 1,0 Gew.-% und das Alkylsilanol in Anteilen zwischen 0,1 und 2,0 Gew.-% enthält.

**0 058 818**

## Claims

1. Impregnating medium for rendering cellulose-containing materials hydrophobic, based on a mixture of alkylsilanols and aluminium salts, characterised as aqueous or aqueous/alcoholic solution of a mixture of alkali aluminate and alkylsilanols, wherein alkyl stands for an ethyl, propyl or n-butyl residue.

2. Medium according to claim 1, characterised in that the mixture of alkali aluminate and alkylsilanols is contained in the solution in a weight ratio of 1 : 10 to 10 : 1.

3. Medium according to claims 1 or 2, characterised in that it contains the alkali aluminate in amounts between 0.3 and 1.0 percent by weight and the alkylsilanol in amounts between 0.1 and 2.0 percent by weight.

## Revendications

1. Agent d'imprégnation pour l'hydrofugation d'une matière cellulosique, à base d'un mélange d'alkylsilanols et de sels d'aluminium, caractérisé en tant que solution aqueuse ou hydro-alcoolique d'un mélange d'aluminate alcalin et d'alkylsilanols, auquel cas l'alkyle représente un reste éthyle, propyle ou n-butyle.

2. Agent selon la revendication 1, caractérisé en ce que la solution renferme le mélange d'aluminate alcalin et d'alkylsilanols dans le rapport pondéral de 1 : 10 à 10 : 1.

3. Agent selon la revendication 1 ou 2, caractérisé en ce qu'il contient l'aluminate alcalin à des teneurs comprises entre 0,03 et 1% en poids et l'alkylsilanol à des teneurs comprises entre 0,1 et 2% en poids.